# EUROPÄISCHE PATENTSCHRIFT

(11) **EP 1 564 068 B1**
(45) Veröffentlichungstag und Bekanntmachung des Hinweises auf die Patenterteilung: **09.04.2008**
(21) Anmeldenummer: 05002091.6
(22) Anmeldetag: 02.02.2005
(51) Int. Cl.: B60P 1/00

(54) **Ausziehbarer Ladeboden für ein Fahrzeug**
Slidable loading plate for a vehicle
Plateau porte-charge coulissante pour un véhicule

(30) Priorität: 12.02.2004 DE 102004007140
(43) Veröffentlichungstag der Anmeldung: 17.08.2005
(73) Patentinhaber: AB SKF, S-415 50 Göteborg (SE)
(72) Erfinder: Edelmann, Ludwig, 97717 Sulzthal (DE); Hofmann, Joachim, 97456 Dittelbrunn (DE); Jeschka, Erwin, 97424 Schweinfurt (DE); Kemmer, Martin, 97525 Schwebheim (DE); Mayer, Uwe, 97702 Münnerstadt (DE); Rembold, Patrick, 97508 Grettstadt (DE)
(74) Vertreter: Kohl, Thomas

(56) Entgegenhaltungen:
- DE-A1- 10 202 914
- GB-A- 2 239 339
- US-A- 5 513 941

## Beschreibung

Die Erfindung betrifft einen ausziehbaren Ladeboden für ein Fahrzeug, insbesondere für einen Personenkraftwagen, der in einem Lade- oder Kofferraum angeordnet werden kann und der, vorzugsweise in Fahrtrichtung des Fahrzeugs, auf mindestens einem Linearlager verschiebbar angeordnet ist, wobei der Ladeboden mit Mitteln versehen ist, mit denen er relativ zum Lade- oder Kofferraum unverschiebbar festgelegt werden kann.

Insbesondere bei Personenkraftwagen, die als Kombi, als Van oder als Geländewagen ausgeführt sind, besteht häufig der Bedarf, relativ schwere und sperrige Gegenstände zu transportieren. Das Ein- und Ausladen dieser Gegenstände gestaltet sich bei entsprechendem Gewicht dieser Gegenstände zumeist sehr schwierig, weil der Gegenstand über die Ladekante in den Lade- bzw. Kofferraum des Personenkraftwagens gehoben werden muss. Daher sind Ladeböden der eingangs genannten Art bekannt, die auf zumeist zwei Linearführungen bzw. Linearlagern gelagert sind und dadurch - in Fahrtrichtung des Fahrzeugs betrachtet - relativ zum Lade- bzw. Kofferraum verschiebbar sind. Zum Beladen des Lade- bzw. Kofferraums mit einem schweren Gegenstand wird der Ladeboden entgegen der Fahrtrichtung aus dem Lade- bzw. Kofferraum herausgezogen, so dass - mangels Störkanten - ein einfaches Heraufheben des einzuladenden Gegenstandes auf den Ladeboden erfolgen kann, was einfacher ist als den Gegenstand ins Innere des Personenkraftwagens zu heben. Ist der Gegenstand auf dem Ladeboden abgelegt, wird er auf diesem ins Innere des Lade- bzw. Kofferraums mittels der Linearführungen hineingeschoben; das Entladen erfolgt in entsprechend umgekehrter Reihenfolge.

Ladeböden der gattungsgemäßen Art werden zumeist für Gewichte ausgelegt, die im Bereich von etwa 150 kg liegen. Hierdurch ist es in sehr einfacher Weise möglich, relativ sperrige und schwere Gegenstände zu handhaben, beispielsweise eine Waschmaschine. Steht das Fahrzeug, in dem ein schwerer Gegenstand auf dem Ladeboden transportiert wird, in leicht geneigter Stellung, beispielsweise an einem Hang, hat dies zur Folge, dass eine nicht unerhebliche Horizontalkomponente der Gewichtskraft auf den Ladeboden wirkt, die versucht, den Ladeboden aus dem Lade- bzw. Kofferraum herauszuschieben. Unter besonders ungünstigen Umständen, d.h. wenn das Fahrzeug bergauf an einem Hang steht, kommt es unter Umständen zu einer unerwünschten Ausschubbewegung des Ladebodens entgegen Fahrtrichtung, wenn die Heckklappe des Personenkraftwagens geöffnet wird, was ein nicht unerhebliches Gefahrenpotential darstellt.

Ein ausziehbarer Ladeboden der eingangs genannten Art ist beispielsweise aus der DE 102 02 914A1 bekannt. Ähnliche Lösungen werden in der US 5,513,941 und in der GB 2 239 339 A offenbart.

Der Erfindung liegt daher die **Aufgabe** zugrunde, einen ausziehbaren Ladeboden für ein Fahrzeug der eingangs genannten Art so weiterzubilden, dass auch unter ungünstigen Betriebsbedingungen sichergestellt ist, dass sich der Ladeboden relativ zum Lade- bzw. Kofferraum nicht in unerwünschter und unkontrollierter Weise bewegen kann. Damit soll die Sicherheit bei der Handhabung schwerer Gegenstände, die auf dem Ladeboden transportiert werden, erhöht werden. Ferner soll ein besonderes Augenmerk auch auf eine einfache Bewirkung des Ein- und Ausschiebens des Ladebodens in den Lade- bzw. Kofferraum und aus diesem heraus gelegt werden.

Die **Lösung** dieser Aufgabe durch die Erfindung ist dadurch gekennzeichnet, dass die Mittel ein Wirkelement aufweisen, das zwischen dem Lade- oder Kofferraum und dem Ladeboden eine kraft-, reib- oder formschlüssige Verbindung herstellen können, wobei das Wirkelement als am oder im Ladeboden angeordneter und um eine am oder im Ladeboden angeordnete Drehachse gelenkig gelagerter Arm ausgebildet ist.

Die Erfindung sieht also bei einem vorbekannten Fahrzeug mit ausziehbarem Ladeboden vor, dass durch geeignete Mittel sichergestellt ist, dass der Ladeboden sich nicht in unerwünschter und unkontrollierter Weise relativ zum Lade- bzw. Kofferraum bewegen kann.

Eine erste Weiterbildung sieht vor, dass der Arm an seinem einen Ende einen Abschnitt aufweist, der mit einem am Lade- bzw. Kofferraum fest angeordneten Gegenabschnitt kraft-, reib- oder formschlüssig zusammenwirken kann.

Zum einen kann dabei vorgesehen werden, dass der Abschnitt des Arms eine Reibfläche bildet, die an dem Gegenabschnitt reibend anliegen kann.

Alternativ hierzu kann auch vorgesehen werden, dass der Abschnitt des Arms einen Vorsprung bildet, der in eine oder mehrere Ausnehmungen im Gegenabschnitt formschlüssig eingreifen kann. Bevorzugt ist dabei der Vorsprung des Arms zahnförmig ausgebildet, wobei die Ausnehmungen im Gegenabschnitt nach Art einer Zahnstange ausgeformt sind.

Eine besonders kompakte und einfach zu handhabende Bauform wird erreicht, wenn die Mittel zum Festlegen des Ladebodens relativ zum Lade- oder Kofferraum am anderen Ende des Arms ein Hubelement umfassen, mit dem dieses Ende in eine zur Verschieberichtung des Ladebodens senkrechte Richtung, vorzugsweise in Richtung der Vertikalen, verschoben werden kann. Das Hubelement kann dabei einen Schieber umfassen, der relativ zum Ladeboden, insbesondere in Verschieberichtung des Ladebodens, verschiebbar angeordnet ist und eine Betätigungsfläche aufweist, die das andere Ende des Arms in eine zur Verschieberichtung des Ladebodens senkrechte Richtung, vorzugsweise in Richtung der Vertikalen, verschieben kann.

Eine konstruktiv besonders kompakte Bauform wird erreicht, wenn die Betätigungsfläche des Schiebers als Keilfläche ausgebildet ist, die mit einer komplementär ausgeformten Gegenkeilfläche am anderen Ende des Arms zusammenwirken kann.

Der Schieber kann dabei mittels eines Federelements in eine Richtung, insbesondere in Verschieberichtung des Ladebodens, vorgespannt sein. Als Federelement kommt bevorzugt eine Spiralfeder zum Einsatz, die konzentrisch um eine Stange angeordnet ist, wobei die Stange so im Ladeboden festgelegt ist, dass ihre Achse in Verschieberichtung des Schiebers im Ladeboden weist. Die Anordnung kann dabei so ausgeführt werden, dass das Federelement die Mittel zum Festlegen des Ladebodens relativ zum Lade- oder Kofferraum so vorspannen, dass der eingebaute Ladeboden relativ zum Lade- oder Kofferraum festgelegt wird.

Zur einfachen Handhabung des Verschiebens des Ladebodens relativ zum Lade- bzw. Kofferraum kann am Schieber ein ergonomisch angeformter Griff vorgesehen werden.

Im Falle dessen, dass sich bei entsprechenden Gewichtsverhältnissen und Betriebsbedingungen bei einem unerwünschten Einsetzen einer Ausschubbewegung des Ladebodens diese quasi automatisch gebremst wird, kann vorgesehen werden, dass am Hubelement, insbesondere am Schieber, ein Übertragungselement mit seinem einen Ende angeordnet ist, das den Ladeboden durchsetzt und an seinem anderen Ende eine Stoßleiste trägt.

Kommt es zu einer unerwünschten und unbeabsichtigten Ausschubbewegung des Ladebodens und besteht die Gefahr, dass der Ladeboden infolge der Bewegung im Zusammenwirken mit einem Hindernis eine Quetschkante für eine Person bildet, würde beim Einklemmen eines Körperteils die Stoßleiste und mit ihr über das Übertragungselement der Schieber betätigt, so dass automatisch eine Bremsung der Bewegung des Ladebodens eingeleitet würde.

Bevorzugt ist das Übertragungselement die Stange, die zur konzentrischen Führung der Spiralfeder dient.

Weiterhin kann vorgesehen werden, dass die Stoßleiste balkenförmig ausgebildet ist, wobei sie sich mit ihrer Längsachse quer zur Fahrtrichtung in einer horizontalen Ebene am in Verschieberichtung des Ladebodens gesehen hinteren und/oder vorderen Ende des Ladebodens erstreckt. Dabei kann sich die Stoßleiste im wesentlichen über die gesamte Breite des Ladebodens erstrecken.

Vorgesehen kann damit werden, dass die genannte Ausgestaltung der Stoßleiste mit angekoppelter Bremsvorrichtung sowohl für ein unerwünschtes Nach-Außen-Rutschen als auch ein unerwünschtes Nach-Innen-Rutschen des Ladebodens genutzt wird.

Der Ladeboden wird nicht in jedem Falle im Lade- bzw. Kofferraum des Personenkraftwagens benötigt. In manchen Fällen ist es vorteilhaft, ihn zu entfernen. Dies allerdings stellt einen hohen Aufwand dar. Eine Weiterbildung sieht daher vor, dass der Ladeboden aus mindestens zwei Teilen besteht, die relativ zueinander klappbar ausgebildet sind. Die Klappachse zwischen den Teilen kann dabei in Verschieberichtung des Ladebodens weisen.

Während grundsätzlich jeder Typ von Linearlagern zur Lagerung des Ladebodens in Frage kommt, hat es sich besonders bewährt, wenn das Linearlager zwei Führungsschienen aufweist, zwischen denen Wälzkörper, insbesondere Kugeln, angeordnet sind, die von einem Käfig geführt werden, der sich in Fahrtrichtung über eine definierte Länge erstreckt. Hiernach kommt ein Linearlager zum Einsatz, das nur für eine begrenzte Hubbewegung ausgelegt ist, bei der jedoch eine sehr solide und stabile Führung des Ladebodens relativ zum Lade- bzw. Kofferraum sichergestellt ist.

Mit dem Erfindungsvorschlag wird eine einfache und preiswert herstellbare Möglichkeit geschaffen, den relativ zum Lade- bzw. Kofferraum linear verschieblichen Ladeboden so auszugestalten, dass ein unerwünschtes Verschieben ausgeschlossen ist. Der Ladeboden wird stets in der gewünschten Position arretiert. Die Unfallgefahr durch eine unbeabsichtigte und unerwünschte Bewegung des Ladebodens wird damit minimiert.

In der Zeichnung sind Ausführungsbeispiele der Erfindung dargestellt. Es zeigen:
- Figur 1: in dreidimensionaler Ansicht den Blick in einen Kofferraum eines Personenkraftwagens, in dem ein klappbar ausgebildeter Ladeboden angeordnet ist,
- Figur 2: dieselbe Anordnung wie in Figur 1 aus einem anderen Blickwinkel,
- Figur 3: in perspektivischer Ansicht einen Teil des Ladebodens,
- Figur 4: in perspektivischer Ansicht einen Teil des Linearlagers samt einem Teil der Mittel zum Festlegen des Ladebodens relativ zum Lade- oder Kofferraum gemäß einer ersten Ausgestaltung,
- Figur 5: die zu Figur 4 analoge Darstellung in einer alternativen Ausgestaltung,
- Figur 6: in perspektivischer Darstellung den Endabschnitt des Ladebodens mit einem Teil der Mittel zum Festlegen des Ladebodens relativ zum Lade- oder Kofferraum in der Stellung, in der der Ladeboden relativ zum Lade- oder Kofferraum festgelegt ist,
- Figur 7: die zu Figur 6 analoge Darstellung, wobei die Linearbewegung des Ladebodens relativ zum Lade- oder Kofferraum freigegeben ist,
- Figur 8: die Draufsicht auf den Ladeboden im Lade- oder Kofferraum und
- Figur 9: den Schnitt A-A gemäß Figur 8.

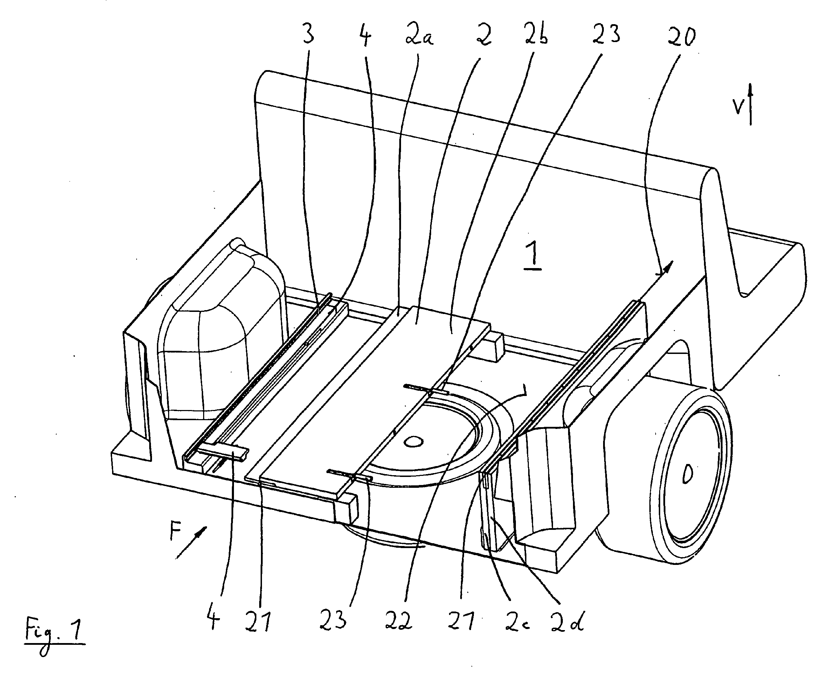

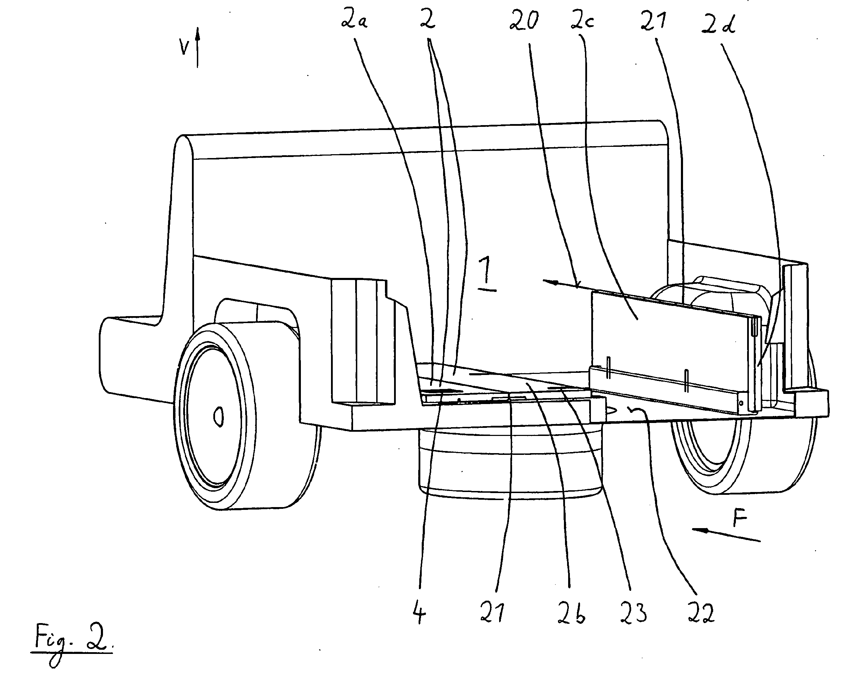

In den Figuren 1 und 2 ist der hintere Bereich eines Personenkraftwagens dargestellt, nämlich der Lade- oder Kofferraum 1 des Wagens. In diesem ist ein Ladeboden 2 angeordnet, der bei geöffneter Heckklappe des Personenkraftwagens in eine Verschieberichtung ausgezogen werden kann, wobei diese in den Ausführungsbeispielen mit der Fahrtrichtung F des Fahrzeugs zusammenfällt.

Der Ladeboden 2 ist klappbar ausgeführt. Vier Teile 2a, 2b, 2c und 2d des Ladebodens 2 liegen bei Benutzung des Ladebodens 2 nebeneinander und bilden so die Auflagefläche für das zu transportierende Gut. Dabei sind jeweils zwei Teile des Ladebodens, nämlich die Teile 2a und 2b bzw. die Teile 2c und 2d, mittels je eines Scharniers 21 gelenkig miteinander verbunden, wobei die Klappachse 20 des Scharniers 21 in Verschieberichtung des Ladebodens 2, d.h. im Ausführungsbeispiel in Fahrtrichtung F, weist.

In den beiden Figuren 1 und 2 ist die linke Hälfte des Ladebodens 2 mit den Teilen 2a und 2b in der Lage skizziert, in der der Ladeboden 2 benutzt wird. In der rechten Bildhälfte ist die Position skizziert, in der die rechte Hälfte des Ladebodens 2 mit den Teilen 2c und 2d hochgeklappt und damit nicht zur Benutzung vorgesehen ist. Wie insbesondere in Figur 2 und dort in der rechten Bildhälfte zu sehen ist, sind die beiden Teile 2c und 2d des Ladebodens 2 mittels des Scharniers 21 zusammengeklappt und insgesamt in eine vertikale Position (Vertikale V) gebracht. In dieser Position liegt der Boden 22 des Lade- oder Kofferraums 1 frei, was in vorteilhafter Weise zur Folge hat, dass die zur Verfügung stehende Ladehöhe nicht durch den Ladeboden 2 reduziert ist. Des weiteren werden die Radkästen des Kraftfahrzeugs abgedeckt, so dass sich in diesem Bereich ein abgeteilter Stauraum, beispielsweise für Kraftfahrzeugzubehör, befindet.

Damit der aus den Teilen 2a, 2b, 2c und 2d bestehende Ladeboden 2 für die Benutzung einen stabilen Verbund bildet, sind Riegelmittel 23 vorgesehen, die im Ausführungsbeispiel aus einem verschiebbaren Stift bestehen, der quer zur Verschieberichtung des Ladebodens 2 aus dem Teil 2b des Ladebodens 2 ausgeschoben werden kann, so dass er in nicht dargestellte Bohrungen im Teil 2c des Ladebodens 2 eingreift. Die Teile 2b und 2c des Ladebodens 2 können damit im heruntergeklappten Zustand des Ladebodens 2 so verriegelt werden, dass beide Teile eine stabile Platte bilden.

Damit schwere und sperrige Gegenstände leichter auf dem Ladeboden 2 positioniert werden können, ist vorgesehen, dass der Ladeboden 2 in Fahrtrichtung F des Kraftfahrzeugs bei geöffneter Heckklappe ausgezogen werden kann. Hierfür sind zwei nur sehr schematisch skizzierte Linearlager 3 vorgesehen, die an den beiden seitlichen Enden des Ladebodens 2 angeordnet sind. Die Linearlager 3 bestehen jeweils aus zwei Führungsschienen, zwischen denen Kugeln angeordnet sind. Die Kugeln werden von einem Käfig geführt, der sich in Verschieberichtung des Ladebodens 2 über eine definierte Länge linear erstreckt. Damit entsteht ein Linearlager 3, das nur eine begrenzte Linearverschiebung zulässt, die so gewählt ist, dass der gewünschte Auszugsweg für den Ladeboden 2 gegeben ist.

Damit der Ladeboden 2 stets in einer gewünschten Position relativ zum Lade- oder Kofferraum 1 arretiert bzw. festgelegt werden kann, sind Mittel 4 zum Festlegen vorgesehen. Details dieser Mittel 4 sind in den weiteren Figuren dargestellt.

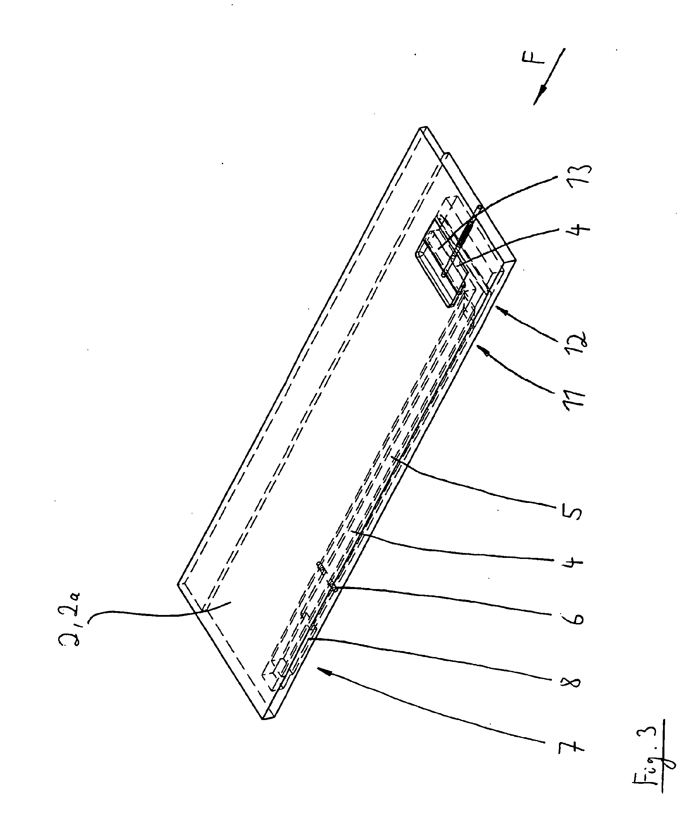

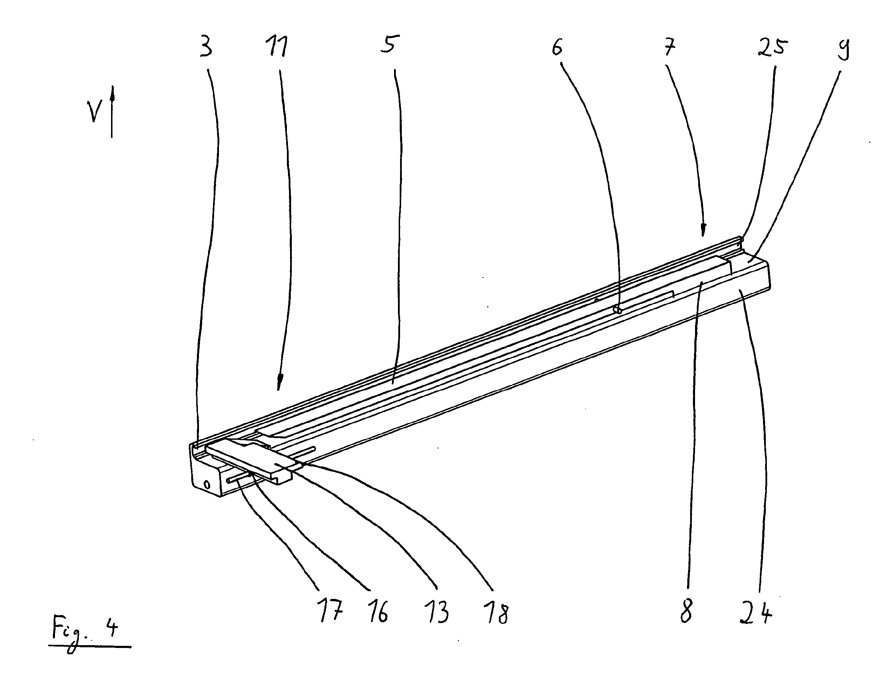

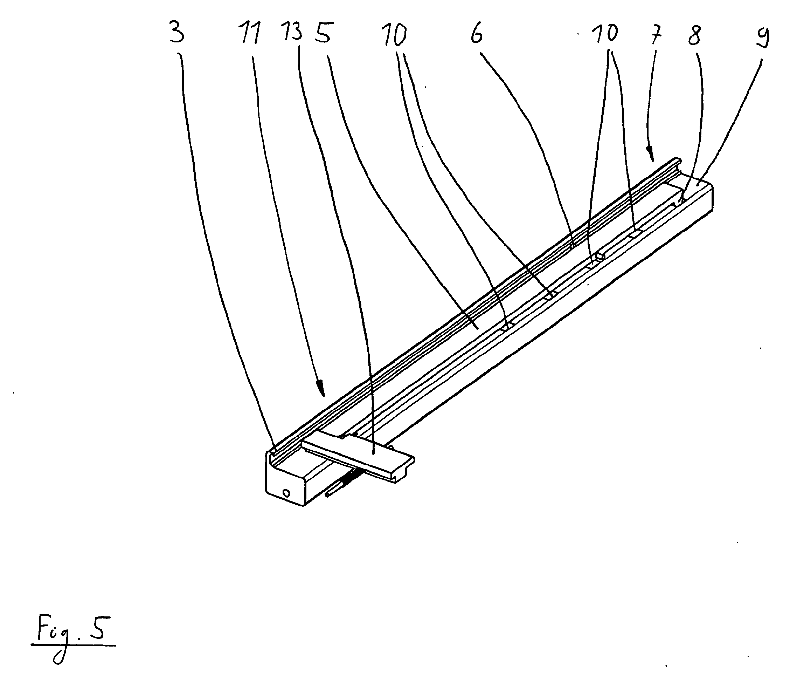

In Figur 3 ist die eine Hälfte des Ladebodens 2 mit den Teilen 2a und 2b dargestellt. Im linken Endbereich des Teils 2a des Ladebodens 2 ist eine nutförmige Ausnehmung eingebracht, in der ein Wirkelement 5 in Form eines gelenkig gelagerten Arms untergebracht ist. Eine Drehachse 6, die im Teil 2a des Ladebodens 2 festgelegt ist, lagert den Arm 5 so, dass er um diese Achse drehbar ist. Im einen Ende 7 des Arms 5 ist ein Abschnitt 8 angeordnet, der zum Zusammenwirken mit einem Gegenabschnitt 9 (siehe Figur 4 und Figur 5) ausgelegt ist. Namentlich kommt es zu einem kraft-, reib- oder formschlüssigen Zusammenwirken des Abschnitts 8 des Arms 5 und des Gegenabschnitts 9, wobei der Gegenabschnitt 9 relativ zum Lade- oder Kofferraum 1 fest und unverschieblich angeordnet ist.

Wie später noch im Detail gezeigt wird, kann eine Verschwenkbewegung um die Drehachse 6 den Abschnitt 8 des Arms 5 so an den Gegenabschnitt 9 anpressen, dass es zwischen diesen beiden Abschnitten 8, 9 zu einer hinreichend großen Reibkraft kommt, die ein Verschieben des Ladebodens 2 relativ zum Lade- oder Kofferraum 1 unmöglich macht. Diese Situation ist in Figur 4 skizziert. Figur 5 zeigt ein alternatives Ausführungsbeispiel, wobei hier kein Reibschluss, sondern ein Formschluss zum Einsatz kommt. Hierzu ist der Abschnitt 8 des Arms 5 als Vorsprung ausgebildet, der in entsprechende Ausnehmungen 10 im Gegenabschnitt 9 im gewünschten Positionen einrasten kann. Eine entsprechende Anzahl Ausnehmungen 10 sind dabei im Gegenabschnitt 9 in definiertem Abstand zueinander so angeordnet, dass der Ladeboden 2 in unterschiedlichen Rastpositionen relativ zum Lade- oder Kofferraum 1 arretiert werden kann. Nicht dargestellt ist eine weitere Ausführungsvariante nach der der Abschnitt 8 des Arms 5 als Zahn ausgebildet ist und mit Ausnehmungen 10 im Gegenabschnitt 9 nach Art einer Zahnstange zusammenwirkt. Hierdurch kann eine formschlüssige Festlegung des Ladebodens 2 in einer Vielzahl von Positionen bewerkstelligt werden.

Wie in der Zusammenschau der Figuren 3 bis 7 gesehen werden kann, befindet sich am anderen Ende 11 des Arms 5 ein Hubelement 12, mit dem dieses Ende 11 im Ausführungsbeispiel in vertikaler Richtung angehoben werden kann. Das hat aufgrund der gelenkigen Lagerung des Arms 5 um die Drehachse 6 zur Folge, dass bei Anheben des einen Endes 11 des Arms 5 das andere Ende 7 in die entsprechende Gegenrichtung bewegt wird. Hierdurch wird der Kraft-, Reib- bzw. Formschluss der Abschnitte 8 und 9 hergestellt.

Das Hubelement 12 besteht im Ausführungsbeispiel aus zwei Schiebern 13, die in Verschieberichtung des Ladebodens 2 (Fahrtrichtung F) verschieblich in je einem Teil des Ladebodens 2, nämlich in den Teilen 2a und 2d des Ladebodens 2, gelagert sind. Am Schieber 13 ist eine keilförmig ausgebildete Betätigungsfläche 14 vorgesehen, die mit einer Gegenkeilfläche 15 am Ende 11 des Arms 5 zusammenwirkt. Damit wird erreicht, dass bei Verschiebung des Schiebers 13 in Richtung der Drehachse 6 die gewünschte Verriegelungs- bzw. Klemmposition des Arms 5 eingeleitet wird, so dass der Ladeboden 2 relativ zum Lade- oder Kofferraum 1 unverschieblich ist. Wird indes der Schieber 13 von der Drehachse 6 weg verschoben, wird der Arm 5 an seinem Ende 11 entlastet, so dass die kraft-, reib- bzw. formschlüssige Verbindung zwischen den Abschnitten 8 und 9 aufgehoben wird. Nicht dargestellt ist, dass in diesem Falle eine in vertikaler Richtung V wirkende Feder den Arm 5 in Entriegelungsposition bewegt.

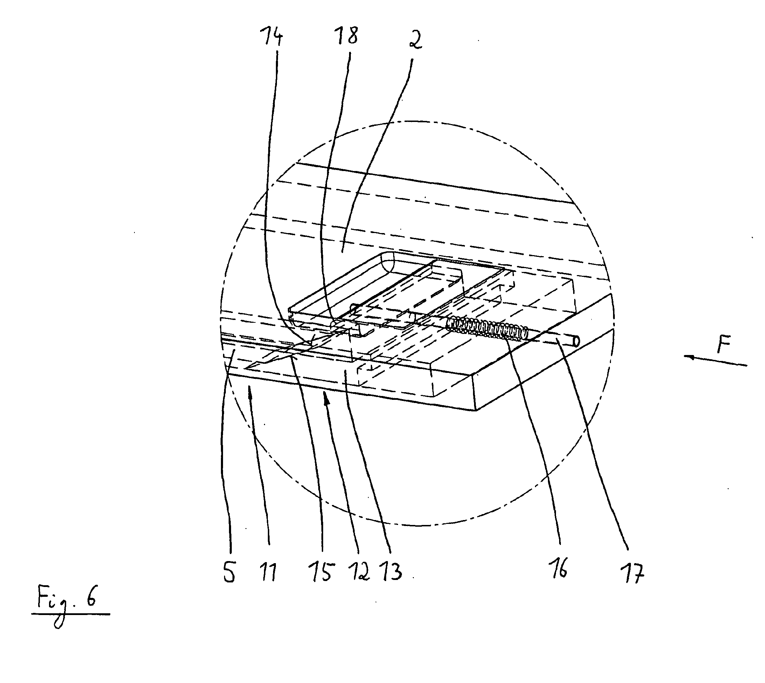

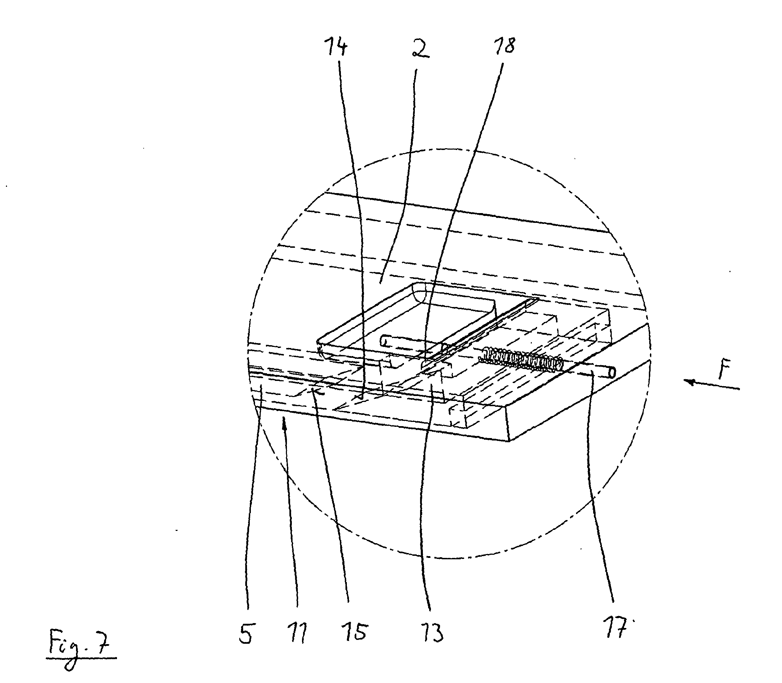

Wie aus der Zusammenschau der Figuren 6 und 7 gesehen werden kann, ist ein Federelement 16 in Form einer Spiralfeder vorgesehen, die im nicht betätigten Zustand des Schiebers diesen in Richtung Drehachse 6 vorspannt und so eine Verriegelung bzw. Arretierung des Ladebodens 2 bewerkstelligt. Zum Entriegeln des Ladebodens zwecks Ausziehen aus dem Lade- oder Kofferraum 1 werden die beiden Schieber 13 in den Teilen 2a bzw. 2d des Ladebodens 2 an einem Griff oder Druckknopf 18 gefasst und von der Drehachse 6 weg gezogen. Dies erfolgt gegen den Widerstand der Spiralfeder 16. Der Arm 5 wird damit an seinem Ende 11 freigegeben, so dass die Verriegelung bzw. Arretierung des Ladebodens 2 aufgehoben ist; der Ladeboden 2 kann relativ zum Lade- oder Kofferraum 1 verschoben bzw. ausgezogen und eingeschoben werden. Werden die Griffe 18 an den Schiebern 13 indes wieder los gelassen, bewirkt die Spiralfeder 16 über die Betätigungsfläche 14 und die Gegenkeilfläche 15 ein Verklemmen bzw. Arretieren des Ladebodens 2.

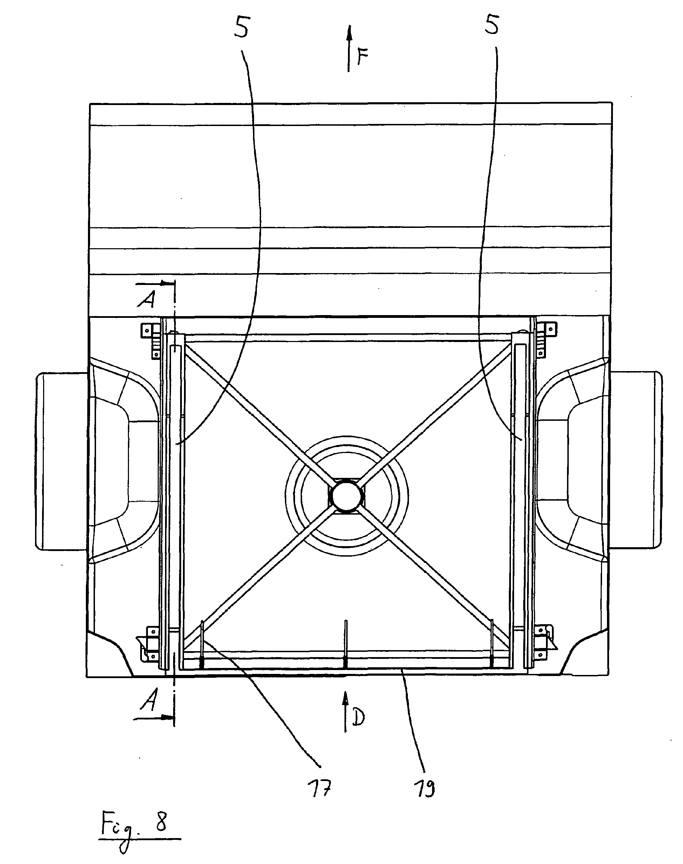

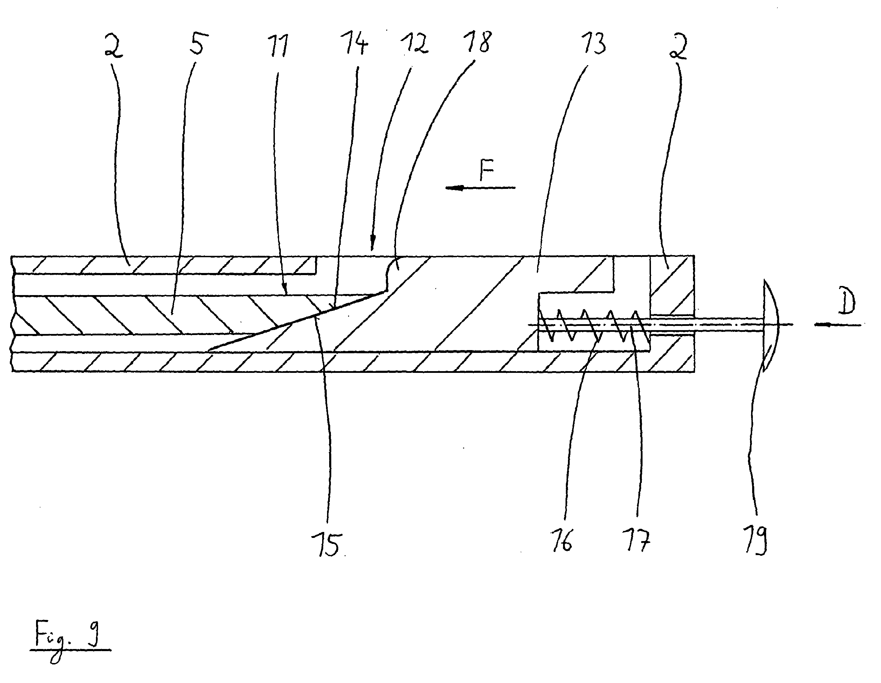

Wie weiter gesehen werden kann, ist die Spiralfeder 16 auf einer Stange 17 gelagert, wobei sich die Achse der Stange 17 in Verschieberichtung des Ladebodens 2 (Fahrtrichtung F) erstreckt. Zur Erhöhung der Sicherheit gegen unbeabsichtigtes Verschieben des Ladebodens 2 ist die Stange 17 als Übertragungselement ausgebildet, das sich durch das hintere Ende des Ladebodens 2, d.h. durch den Teil 2a des Ladebodens 2, hindurch erstreckt, wobei am Ende der Stange 17 eine Stoßleiste 19 angeordnet ist. Diese Stoßleiste ist in den Figuren 8 und 9 zu erkennen. Wie insbesondere in Figur 9 gesehen werden kann, ist die Stoßleiste 19 über die Stange 17 so am Schieber 13 angeordnet, dass bei Ausübung einer Druckkraft D auf die Stoßleiste 19 der Schieber 13 in Arretierungs- bzw. Klemmposition bewegt wird. Wie weiter aus Figur 9 gesehen werden kann, bewegt in diesem Falle der Schieber 13 den Arm 5 mit seinem Ende 12 in Vertikalrichtung, was zum Klemmen des Abschnitts 8 des Arms 5 am Gegenabschnitt 9 führt. Durch diese Ausgestaltung kann erreicht werden, dass es bei Quetschgefahr durch unbeabsichtigtes Herausfahren des Ladebodens 2 zu einer Bremsung des Ladebodens 2 kommt.

Als Linearlager 3 können, wie bereits erwähnt, übliche Lagersysteme zum Einsatz kommen. Bevorzugt ist an einer fest im Lade- oder Kofferraum 1 angeordneten Schiene 24 eine Führungsschiene 25 des Linearlagers angeordnet (siehe Figur 4). In den Teilen 2a bzw. 2d des Ladebodens 2 sind die entsprechenden, nicht dargestellten Gegenführungsschienen des Linearlagers 3 angeordnet, wobei zwischen der Führungsschiene 25 und der Gegenführungsschiene Kugeln angeordnet sind.

### Bezugszeichenliste

- 1: Lade- oder Kofferraum
- 2: Ladeboden
- 2a: Teil des Ladebodens
- 2b: Teil des Ladebodens
- 2c: Teil des Ladebodens
- 2d: Teil des Ladebodens
- 3: Linearlager
- 4: Mitteln zum Festlegen des Ladebodens relativ zum Lade- oder Kofferraum
- 5: Wirkelement (Arm)
- 6: Drehachse
- 7: Ende des Arms
- 8: Abschnitt des Arms
- 9: Gegenabschnitt
- 10: Ausnehmung im Gegenabschnitt
- 11: Ende des Arms
- 12: Hubelement
- 13: Schieber
- 14: Betätigungsfläche
- 15: Gegenkeilfläche
- 16: Federelement (Spiralfeder)
- 17: Stange, Übertragungselement
- 18: Griff, Druckknopf
- 19: Stoßleiste
- 20: Klappachse
- 21: Scharnier
- 22: Boden des Lade- oder Kofferraums
- 23: Riegelmittel
- 24: Schiene
- 25: Führungsschiene

- F: Fahrtrichtung
- V: Vertikale
- D: Druckkraft

## Patentansprüche

1. Ausziehbarer Ladeboden für ein Fahrzeug, insbesondere für einen Personenkraftwagen, der in einem Lade- oder Kofferraum (1) angeordnet werden kann und der, vorzugsweise in Fahrtrichtung (F) des Fahrzeugs, auf mindestens einem Linearlager (3) verschiebbar angeordnet ist, wobei der Ladeboden (2) mit Mitteln (4) versehen ist, mit denen er relativ zum Lade- oder Kofferraum (1) unverschiebbar festgelegt werden kann,
**dadurch gekennzeichnet,**
**dass** die Mittel (4) ein Wirkelement (5) aufweisen, das zwischen dem Lade- oder Kofferraum (1) und dem Ladeboden (2) eine kraft-, reib- oder formschlüssige Verbindung herstellen kann, wobei das Wirkelement (5) als am oder im Ladeboden (2) angeordneter und um eine am oder im Ladeboden (2) angeordnete Drehachse (6) gelenkig gelagerter Arm (5) ausgebildet ist.

2. Ausziehbarer Ladeboden nach Anspruch 1, **dadurch gekennzeichnet, dass** der Arm (5) an seinem einen Ende (7) einen Abschnitt (8) aufweist, der mit einem am Lade- oder Kofferraum (1) fest anordboren Gegenabschnitt (9) kraft-, reib- oder formschlüssig zusammenwirken kann.

3. Ausziehbarer Ladeboden nach Anspruch 2, **dadurch gekennzeichnet, dass** der Abschnitt (8) des Arms (5) eine Reibfläche bildet, die an dem Gegenabschnitt (9) reibend anliegen kann.

4. Ausziehbarer Ladeboden nach Anspruch 2, **dadurch gekennzeichnet, dass** der Abschnitt (8) des Arms (5) einen Vorsprung bildet, der in eine oder mehrere Ausnehmungen (10) im Gegenabschnitt (9) formschlüssig eingreifen kann.

5. Ausziehbarer Ladeboden nach Anspruch 4, **dadurch gekennzeichnet, dass** der Vorsprung (8) des Arms (5) zahnförmig ausgebildet ist und die Ausnehmungen (10) im Gegenabschnitt (9) nach Art einer Zahnstange ausgebildet sind.

6. Ausziehbarer Ladeboden nach einem der Ansprüche 1 bis 5, **dadurch gekennzeichnet, dass** die Mittel (4) am anderen Ende (11) des Arms (5) ein Hubelement (12) umfassen, mit dem dieses andere Ende (11) des Arms in eine zur Verschieberichtung des Ladebodens (2) senkrechte Richtung, vorzugsweise in Richtung der Vertikalen (V), verschoben werden kann.

7. Ausziehbarer Ladeboden nach Anspruch 6, **dadurch gekennzeichnet, dass** das Hubelement (12) einen Schieber (13) umfasst, der relativ zum Ladeboden (2), insbesondere in Verschieberichtung des Ladebodens (2), verschiebbar angeordnet ist und eine Betätigungsfläche (14) aufweist, die das andere Ende (11) des Arms (5) in eine zur Verschieberichtung des Ladebodens (2) senkrechte Richtung, vorzugsweise in Richtung der Vertikalen (V), verschieben kann.

8. Ausziehbarer Ladeboden nach Anspruch 7, **dadurch gekennzeichnet, dass** die Betätigungsfläche (14) des Schiebers (13) als Keilfläche ausgebildet ist, die mit einer komplementär ausgeformten Gegenkeilfläche (15) am anderen Ende (11) des Arms (5) zusammenwirken kann.

9. Ausziehbarer Ladeboden nach Anspruch 7 oder 8, **dadurch gekennzeichnet, dass** der Schieber (13) mittels eines Federelements (16) in eine Richtung, insbesondere in Verschieberichtung des Ladebodens (2), vorgespannt ist.

10. Ausziehbarer Ladeboden nach Anspruch 9, **dadurch gekennzeichnet, dass** das Federelement (16) eine Spiralfeder ist, die konzentrisch um eine Stange (17) angeordnet ist, wobei die Stange (17) so im Ladeboden (2) festgelegt ist, dass ihre Achse in Verschieberichtung des Schiebers (13) im Ladeboden (2) weist.

11. Ausziehbarer Ladeboden nach Anspruch 9 oder 10, **dadurch gekennzeichnet, dass** das Federelement (16) die Mittel (4) so vorspannen, dass der eingebaute Ladeboden (2) relativ zum Lade- oder Kofferraum (1) festgelegt wird.

12. Ausziehbarer Ladeboden nach einem der Ansprüche 7 bis 11, **dadurch gekennzeichnet, dass** am Schieber (13) ein Griff oder Druckknopf (18) angeordnet ist.

13. Ausziehbarer Ladeboden nach einem der Ansprüche 6 bis 12, **dadurch gekennzeichnet, dass** am Hubelement (12), insbesondere am Schieber (13), mindestens ein Übertragungselement (17) mit seinem einen Ende angeordnet ist, wobei das übertragungselement den Ladeboden (2) durchsetzt und an seinem anderen Ende eine Stoßleiste (19) trägt.

14. Ausziehbarer Ladeboden nach Anspruch 10 und 13, **dadurch gekennzeichnet, dass** das Übertragungselement (17) die Stange ist, die zur konzentrischen Führung der Spiralfeder (16) dient.

15. Ausziehbarer Ladeboden nach Anspruch 13 oder 14, **dadurch gekennzeichnet, dass** die Stoßleiste (19) balkenförmig ausgebildet ist, wobei sie sich mit ihrer Längsachse quer zur Verschieberichtung des Ladebodens (2) in einer horizontalen Ebene am in Verschieberichtung des Ladebodens (2) gesehen hinteren und/oder vorderen Ende des Ladebodens (2) erstreckt.

16. Ausziehbarer Ladeboden nach einem der Ansprüche 13 bis 15, **dadurch gekennzeichnet, dass** die Stoßleiste (19) sich im wesentlichen über die gesamte Breite des Ladebodens (2) erstreckt.

17. Ausziehbarer Ladeboden nach einem der Ansprüche 1 bis 16, **dadurch gekennzeichnet, dass** der Ladeboden (2) aus mindestens zwei Teilen (2a, 2b, 2c, 2d) besteht, die relativ zueinander klappbar ausgebildet sind.

18. Ausziehbarer Ladeboden nach Anspruch 17, **dadurch gekennzeichnet, dass** die Klappachse (20) zwischen den Teilen (2a, 2b, 2c, 2d) in Verschieberichtung des Ladebodens (2) weist.

19. Ausziehbarer Ladeboden nach einem der Ansprüche 1 bis 18, **dadurch gekennzeichnet, dass** das Linearlager (3) zwei Führungsschienen aufweist, zwischen denen Wälzkörper, insbesondere Kugeln, angeordnet sind, die von einem Käfig geführt werden, der sich in Verschieberichtung des Ladebodens (2) über eine definierte Länge erstreckt.

## Claims

1. An extendable loading platform for a vehicle, in particular for an automobile, which can be arranged in a load space or luggage compartment (1) and which is arranged so that it can be displaced, preferably in the direction of travel (F) of the vehicle, on at least one linear bearing (3), wherein the loading platform (2) is provided with means (4) with which it can be located non-displaceably relative to the load space or luggage compartment (1),
**characterised in**
**that** the means (4) have an active element (5) which can create a force-locking, frictional or form-locking connection between the load space or luggage compartment (1), wherein the active element (5) is in the form of an arm (5) which is arranged on or in the loading platform (2) and is pivotably mounted about a pivot (6) arranged on or in the loading platform (2).

2. An extendable loading platform according to Claim 1, **characterised in that** at one end the arm (5) has a portion (8) which can co-operate in a force-locking, frictional or form-locking manner with a counter portion (9) which can be mounted fixed on the load space or luggage compartment (1).

3. An extendable loading platform according to Claim 2, **characterised in that** the portion (8) of the arm (5) forms a friction surface which can abut to rub against the counter portion (9).

4. An extendable loading platform according to Claim 2, **characterised in that** the portion (8) of the arm (5) forms a projection which can engage in a form-locking manner in one or more recesses (10) in the counter portion (9).

5. An extendable loading platform (1) according to Claim 4, **characterised in that** the projection (8) of the arm (5) is tooth-shaped and the recesses (10) in the counter portion (9) are formed in the manner of a toothed rack.

6. An extendable loading platform according to any one of Claims 1 to 5, **characterised in that** at the other end (11) of the arm (5) the means (4) comprise a lifting element (12) with which this other end (11) of the arm can be displaced in a direction perpendicular to the displacement direction of the loading platform (2), preferably in the direction of the vertical line (V).

7. An extendable loading platform according to Claim 6, **characterised in that** the lifting element (12) comprises a slide member (13) which is arranged to slide relative to the loading platform (2), in particular in the displacement direction of the loading platform (2), and has an actuating surface (14) which can displace the other end (11) of the arm (5) in a direction perpendicular to the displacement direction of the loading platform (2), preferably in the direction of the vertical line (V).

8. An extendable loading platform according to Claim 7, **characterised in that** the actuating surface (14) of the slide member (13) is in the form of a wedge surface which can co-operate with a counter wedge surface (15) of complementary shape on the other end (11) of the arm (5).

9. An extendable loading platform according to Claim 7 or 8, **characterised in that** the slide member (13) is biased in one direction by means of a spring element (16), in particular in the displacement direction of the loading platform (2).

10. An extendable loading platform according to Claim 9, **characterised in that** the spring element (16) is a helical spring which is arranged concentrically about a rod (17), wherein the rod (17) is so located in the loading platform (2) that its axis points in the displacement direction of the slide member (13) in the loading platform (2).

11. An extendable loading platform according to Claim 9 or 10, **characterised in that** the spring element (16) preloads the means (4) in such a way that the incorporated loading platform (2) is located relative to the load space or luggage compartment (1).

12. An extendable loading platform according to any one of Claims 7 to 11, **characterised in that** a handle or pushbutton is provided on the slide member (13).

13. An extendable loading platform according to any one of Claims 6 to 12, **characterised in that** at least one transmission element (17) is arranged with one of its ends on the lifting element (12), in particular on the slide member (13), wherein the transmission element (17) passes through the loading platform (2) and carries a push bar (19) at its other end.

14. An extendable loading platform according to Claims 10 and 13, **characterised in that** the transmission element (17) is the rod which serves for the concentric guidance of the helical spring (16).

15. An extendable loading platform according to Claim 13 or 14, **characterised in that** the push bar (19) is beam-like, wherein with its longitudinal axis it extends transversely to the displacement direction of the loading platform (2) in a horizontal plane, at the rear end and/or front end of loading platform (2) viewed in the displacement direction of the loading platform (2).

16. An extendable loading platform according to any one of Claims 13 to 15, **characterised in that** the push bar (19) extends substantially over the entire width of the loading platform (2).

17. An extendable loading platform according to any one of Claims 1 to 16, **characterised in that** the loading platform (2) comprises at least two parts (2a,2b,2c,2d) which are designed to be hinged relative to one another.

18. An extendable loading platform according to Claims 17, **characterised in that** the hinge axis (20) between the parts (2a,2b,2c,2d) faces in the displacement direction of the loading platform (2).

19. An extendable loading platform according to any one of Claims 1 to 18, **characterised in that** the linear bearing (3) has two guide rails, between which are arranged rolling bodies, in particular balls, which are guided by a cage which extends over a given length in the displacement direction of the loading platform (2).

## Revendications

1. Plateau porte-charge coulissant pour un véhicule, notamment pour une voiture particulière, qui peut être disposé dans un espace de chargement ou dans un coffre (1) et qui, de préférence, est monté coulissant dans la direction de déplacement (F) du véhicule sur au moins un palier linéaire (3), le plateau porte-charge (2) étant pourvu de moyens (4) grâce auxquels il peut être immobilisé sans possibilité de coulissement par rapport à l'espace de chargement ou au coffre (1)
**caractérisé par le fait que**
les moyens (4) comportent un élément actif (5) qui peut établir entre l'espace de chargement ou le coffre (1) une liaison par serrage, par frottement ou par obstacle, l'élément actif (5) étant agencé sous la forme d'un bras qui est disposé sur ou est intégré dans le plateau porte-charge (2) et est articulé autour d'un axe de rotation (6) disposé sur ou intégré dans le plateau porte-charge (2).

2. Plateau porte-charge coulissant selon la revendication 1, **caractérisé par le fait que** le bras (5), à l'une de ses extrémités (7), présente un segment (8) qui peut coopérer par serrage, par frottement ou par obstacle avec un segment associé (9) monté fixe dans l'espace de chargement ou dans le coffre (1).

3. Plateau porte-charge coulissant selon la revendication 2, **caractérisé par le fait que** le segment (8) du bras (5) forme une surface de frottement qui peut être appliquée avec frottement contre le segment associé (9).

4. Plateau porte-charge coulissant selon la revendication 2, **caractérisé par le fait que** le segment (8) du bras (5) forme une saillie qui peut s'engager par complémentarité de forme dans un ou plusieurs évidements (10) dans le segment associé (9).

5. Plateau porte-charge coulissant selon la revendication 4, **caractérisé par le fait que** la saillie (8) du bras (5) est agencée en forme de dent et que les évidements (10) sont agencés à la manière d'une crémaillère.

6. Plateau porte-charge coulissant selon une des revendications 1 à 5, **caractérisé par le fait que** les moyens (4) à l'autre extrémité (11) du bras (5) comprennent un élément mobile (12) à l'aide duquel ladite autre extrémité (11) du bras peut être déplacée dans une direction perpendiculaire à la direction de coulissement du plateau porte-charge (2), de préférence dans la direction verticale (V).

7. Plateau porte-charge coulissant selon la revendication 6, **caractérisé par le fait que** l'élément mobile (12) comprend un coulisseau (13) qui est monté coulissant par rapport au plateau porte-charge (2), notamment dans la direction de coulissement dudit plateau porte-charge (2), et présente une surface d'actionnement (14) qui peut déplacer l'autre extrémité (11) du bras (5) dans une direction perpendiculaire à la direction de coulissement du plateau porte-charge (2), de préférence dans la direction verticale (V).

8. Plateau porte-charge coulissant selon la revendication 7, **caractérisé par le fait que** la surface d'actionnement (14) du coulisseau (13) est conformée en coin, qui coopère avec une surface associée (15), de forme complémentaire, aménagée à l'autre extrémité (11) du bras (5).

9. Plateau porte-charge coulissant selon la revendication 7 ou 8, **caractérisé par le fait que** le coulisseau (13) est précontraint par un élément élastique (16) dans une direction, notamment dans la direction de coulissement du plateau porte-charge (2).

10. Plateau porte-charge coulissant selon la revendication 9, **caractérisé par le fait que** l'élément élastique (16) est un ressort spirale qui est enroulé concentrique autour d'une tige (17), la tige (17) étant montée dans le plateau porte-charge (2) de manière telle que son axe soit orienté dans la direction de coulissement du coulisseau (13) dans le plateau porte-charge (2).

11. Plateau porte-charge coulissant selon la revendication 9 ou 10, **caractérisé par le fait que** l'élément élastique (16) précontraint les moyens (4) de manière telle que le plateau porte-charge (2) installé soit immobilisé par rapport à l'espace de chargement ou au coffre (1).

12. Plateau porte-charge coulissant selon une des revendications 7 à 11, **caractérisé par le fait qu'**une poignée ou un bouton (18) est disposée sur le coulisseau (13).

13. Plateau porte-charge coulissant selon une des revendications 6 à 12, **caractérisé par le fait qu'**un élément de transmission (17) est monté par l'une de ses extrémités sur l'élément mobile (12), plus particulièrement sur le coulisseau (13), l'élément de transmission traversant le plateau porte-charge (2) et portant à son autre extrémité une barre (19).

14. Plateau porte-charge coulissant selon les revendications 10 et 13, **caractérisé par le fait que** l'élément de transmission (17) est la tige qui sert au guidage concentrique du ressort spirale (16).

15. Plateau porte-charge coulissant selon la revendication 13 ou 14, **caractérisé par le fait que** la barre (19) est conformée en poutre, celle-ci s'étendant avec son axe longitudinal transversalement à la direction de coulissement du plateau porte-charge (2) dans un plan horizontal, à l'extrémité arrière et/ou avant du plateau porte-charge (2), vu dans la direction de coulissement.

16. Plateau porte-charge coulissant selon une des revendications 13 à 15, **caractérisé par le fait que** la barre (19) s'étend essentiellement sur la totalité de la largeur du plateau porte-charge (2).

17. Plateau porte-charge coulissant selon une des revendications 1 à 16, **caractérisé par le fait que** le plateau porte-charge (2) se compose d'au moins deux parties (2a, 2b, 2c, 2d) repliables l'une par rapport à l'autre.

18. Plateau porte-charge coulissant selon la revendication 17, **caractérisé par le fait que** l'axe de pivotement (20) entre les parties (2a, 2b, 2c, 2d) est orienté dans la direction de coulissement du plateau porte-charge (2).

19. Plateau porte-charge coulissant selon une des revendications 1 à 18, **caractérisé par le fait que** le palier linéaire (3) comporte deux rails de guidage entre lesquels sont disposés des corps de roulement, plus particulièrement des billes, guidés par une cage qui s'étend sur une longueur définie dans la direction de coulissement du plateau porte-charge (2).
